(19) **Europäisches Patentamt / European Patent Office / Office européen des brevets**

(11) **EP 3 839 830 B1**

(12) **EUROPEAN PATENT SPECIFICATION**

(45) Date of publication and mention
of the grant of the patent:
**17.06.2026  Bulletin 2026/25**

(21) Application number: **20165489.4**

(22) Date of filing: **25.03.2020**

(51) International Patent Classification (IPC):
**G06N 3/044** (2023.01)    **G06N 3/045** (2023.01)
**G06N 3/084** (2023.01)    **G06N 3/0442** (2023.01)
**G06N 3/0455** (2023.01)    **G06N 3/0895** (2023.01)
**G06N 5/01** (2023.01)

(52) Cooperative Patent Classification (CPC):
**G06N 3/084; G06N 3/044; G06N 3/0442;
G06N 3/045; G06N 3/0455; G06N 3/0895;**
G06N 5/01

(54) **TRAJECTORY ESTIMATION FOR VEHICLES**

TRAJEKTORIENSCHÄTZUNG FÜR FAHRZEUGE

ESTIMATION DE TRAJECTOIRE POUR VÉHICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.12.2019  EP 19465599**

(43) Date of publication of application:
**23.06.2021   Bulletin 2021/25**

(73) Proprietor: **Elektrobit Automotive GmbH
91058 Erlangen (DE)**

(72) Inventors:
• **Trasnea, Bogdan
65824 Schwalbach a. Ts. (DE)**
• **Grigorescu, Sorin Mihai
65824 Schwalbach a. Ts. (DE)**

(74) Representative: **Aumovio Corporation
AUMOVIO Germany GmbH
Taunusstraße 36
80807 München (DE)**

(56) References cited:
**US-A1- 2019 220 003**

• **PARK SEONG HYEON ET AL: "Sequence-to-
Sequence Prediction of Vehicle Trajectory via
LSTM Encoder-Decoder Architecture", 2018
IEEE INTELLIGENT VEHICLES SYMPOSIUM (IV),
IEEE, 26 June 2018 (2018-06-26), pages 1672 -
1678, XP033423538, DOI: 10.1109/
IVS.2018.8500658**
• **KAOUTHER MESSAOUD ET AL: "Relational
Recurrent Neural Networks For Vehicle
Trajectory Prediction", 5 August 2019
(2019-08-05), pages 2195180, XP055671803,
Retrieved from the Internet <URL:https://hal.
inria.fr/hal-02195180/document> [retrieved on
20200226], DOI: 10.1109/ITSC.2019.8916887**
• **SCOTT PENDLETON ET AL: "Perception,
Planning, Control, and Coordination for
Autonomous Vehicles", MACHINES, vol. 5, no. 1,
17 February 2017 (2017-02-17), pages 6,
XP055553408, DOI: 10.3390/machines5010006**
• **MENGLU LAN ET AL: "BIT*-based path planning
for micro aerial vehicles", IECON 2016 - 42ND
ANNUAL CONFERENCE OF THE IEEE
INDUSTRIAL ELECTRONICS SOCIETY, IEEE, 23
October 2016 (2016-10-23), pages 6079 - 6084,
XP033033155, DOI: 10.1109/IECON.2016.7792953**

**Description**

The present invention is related to a method, a computer program code, and an apparatus for estimating a trajectory for an autonomous or semi-autonomous vehicle. The invention is further related to an autonomous driving controller using such a method or apparatus and to an autonomous or semi-autonomous vehicle comprising such an autonomous driving controller.

Recent advances in the area of deep learning and artificial intelligence have backed up the increasingly rapid progress of the autonomous driving domain. Autonomous vehicles are robotic systems that can guide themselves without human operators. Such vehicles are equipped with artificial intelligence components and are expected to change the future of mobility in a significant manner, bringing a variety of benefits into everyday life, such as making driving easier, improving the capacity of road networks, and reducing vehicle-related accidents. In order to produce a collision-free route and decide the next actions based on it, the vehicle should consider all the threats, which are present in the surrounding environment.

Ensuring safety is a top priority for autonomous driving and advanced driver assistance systems. When the vehicle is driving, it encounters various dynamic traffic situations, in which the moving objects around it could be a potential threat to safe driving. In order to produce a collision-free route and decide the next actions based on it, the vehicle should consider all the threats, which are present in the surrounding environment. Due to the complexity of such a task, deep learning models have been employed to aid in solving it. There are several conceptually different self-driving architectures, namely end-to-end learning [1], deep reinforcement learning [2] and perception-planning-action pipelines [3].

In this context, end-to-end learning is defined as developing and training a complex neural network in order to directly map input sensory data to vehicle commands. Deep reinforcement learning requires that the agent interacts with its environment and learns an optimal driving policy, based on the shaping of a complex reward function. A major downside of deep reinforcement learning is that such an architecture is difficult to train in real-life scenarios due to the interaction constraint and tends to generalize on specific driving scenarios, e.g. highway driving. **In** addition, the functional safety of these systems is usually difficult to monitor, mainly due to their direct mapping of sensory inputs to actuators.

In a modular pipeline, the main problem is divided into smaller sub-problems, where each module is designed to solve a specific task and deliver the outcome as input to the next component. Therefore, an autonomous vehicle must have the ability to sense its own surroundings and form an adequate environment model, which precisely represents the dynamic and stationary objects. Afterwards, it needs to plan its path, which is defined as the autonomous vehicle's ability to find a collision-free route between the current position and a desired destination. Finally, it needs to act based on the computed path by applying the appropriate control signals with regard to acceleration and steering for the autonomous vehicle.

Since motion planning can be viewed as a sequence-to-sequence mapping problem, or as a sequence generation task, recurrent neural networks have been proposed for modeling the driving trajectories. Different from conventional neural networks, a recurrent neural network contains a time dependent feedback loop in its memory cell. In order to use recurrent neural networks for predicting a future trajectory, each separate point is considered a state, which further implies that the whole trajectory is represented as a sequence. The transition from one state to any another is strictly constrained by the topology of the network.

Many approaches address the task of predicting the trajectory of vehicles surrounding the ego-car. In [4], a multi-modal trajectory prediction of surrounding vehicles is proposed, which assigns confidence values to maneuvers being performed by vehicles and outputs a multi-modal distribution over future motion based on them. In [5], a long short-term memory is proposed, which predicts the location of vehicles in an occupancy grid at discrete intervals of 0.5 s, 1 s and 2 s into the future, while in [6] an encoder-decoder architecture is used to produce the K most likely trajectory candidates over an occupancy grid map by employing the beam search technique.

US 2019/0220003 A1 discloses a technique directed to computer-assisted or autonomous driving (CA/AD). The technique makes use of a system controller, disposed in a first CA/AD vehicle, to manage a collaborative three-dimensional (3-D) map of an environment around the first CA/AD vehicle. The system controller is configured to receive, from another CA/AD vehicle proximate to the first CA/AD vehicle, an indication of at least a portion of another 3-D map of another environment around both the first CA/AD vehicle and the other CA/AD vehicle, and to incorporate the at least the portion of the 3-D map proximate to the first CA/AD vehicle and the other CA/AD vehicle into the 3-D map of the environment of the first CA/AD vehicle managed by the system controller. Locations of identified and classified objects may be provided in a compact representation of the 3-D space, which may use an octree.

It is an object of the present invention to provide improved solutions for estimating a trajectory for an autonomous or semi-autonomous vehicle.

This object is achieved by a method according to claim 1, by a computer program code according to claim 6, which implements this method, and by an apparatus according to claim 7. The dependent claims include advantageous further developments and improvements of the present principles as described below.

According to a first aspect, a method in accordance with claim 1 is provided.

Accordingly, a computer program code in accordance with claim 6 is provided.

The term computer has to be understood broadly. In particular, it also includes electronic control units, embedded devices and other processor-based data processing devices.

The computer program code can, for example, be made available for electronic retrieval or stored on a computer-readable storage medium.

According to another aspect, an apparatus in accordance with claim 7 is provided.

According to the invention, a new approach for local trajectory prediction for autonomous vehicles within a finite horizon is used. The input data is generated from a discrete octree-based environment model, and is further fed to an encoder-decoder recurrent neural network. Trajectory estimation is formulated as a classification problem by minimizing an error between the predicted trajectories and manually driven trajectories in a training dataset. This allows avoiding the pitfall of regression-based trajectory estimation, in which there is an infinite state space for the output trajectory points. The described solution leverages the innate property of the state vector between the encoder and the decoder to represent a learned sequence of trajectory points constrained by road topology. The encoder-decoder recurrent neural network further receives a current segment of a reference trajectory. Using a current segment of a reference trajectory together with the sensor measurements allows efficiently building upon the recurrent neural network encoder-decoder architecture, which has shown excellent performance for sequence-to-sequence tasks.

In an advantageous embodiment, the octree environment model has a configurable resolution. In this way, it is possible to configure the resolution to a lower value, if necessary, in order to reduce the processing times and the memory usage. In addition, reducing the resolution decreases the necessary training time. Having a configurable environment resolution is an advantage especially on embedded devices.

In an advantageous embodiment, both the encoder and the decoder use a set of long short-term memory networks. This allows solving the vanishing gradient problem, which is a main challenge when basic recurrent neural networks are used. Preferably, both the encoder and the decoder may use 256 long short-term memory network layers.

In an advantageous embodiment, the environment data is composed of image data and depth data. Using these data allows computing an octree environment model, which represents free space, i.e. the driving area, and occupied areas in a three-dimensional perspective. Occupied space is obtained by the end points of a distance sensor, while free space corresponds to the observed area between the sensor and the end point. The occupied space is thus mapped from the depth image, at the corresponding distance in space.

In an advantageous embodiment, the encoder-decoder recurrent neural network is trained in a self-supervised way using training data consisting of sequences of octrees and points from a reference path. Training the encoder-decoder recurrent neural network using a self-supervised learning approach has the advantage that no manual labelling of the training data is required.

Advantageously, an autonomous driving controller comprises an apparatus according to the invention or is configured to perform a method for estimating a trajectory for an autonomous or semi-autonomous vehicle. Preferably, an autonomous or semi-autonomous vehicle comprises such an autonomous driving controller. In this way, an improved autonomous driving behavior in different driving scenarios is achieved.

Further features of the present invention will become apparent from the following description and the appended claims in conjunction with the figures.

Figures

Fig. 1    schematically illustrates a method for estimating a trajectory for an autonomous or semi-autonomous vehicle;

Fig. 2    schematically illustrates a first embodiment of an apparatus for estimating a trajectory for an autonomous or semi-autonomous vehicle;

Fig. 3    schematically illustrates a second embodiment of an apparatus for estimating a trajectory for an autonomous or semi-autonomous vehicle;

Fig. 4    schematically illustrates a motor vehicle in which a solution according to the invention is implemented;

Fig. 5    is a basic illustration of the local state trajectory estimation problem for autonomous driving; and

Fig. 6    depicts a neural network encoder-decoder architecture for predicting local trajectories.

Detailed description

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

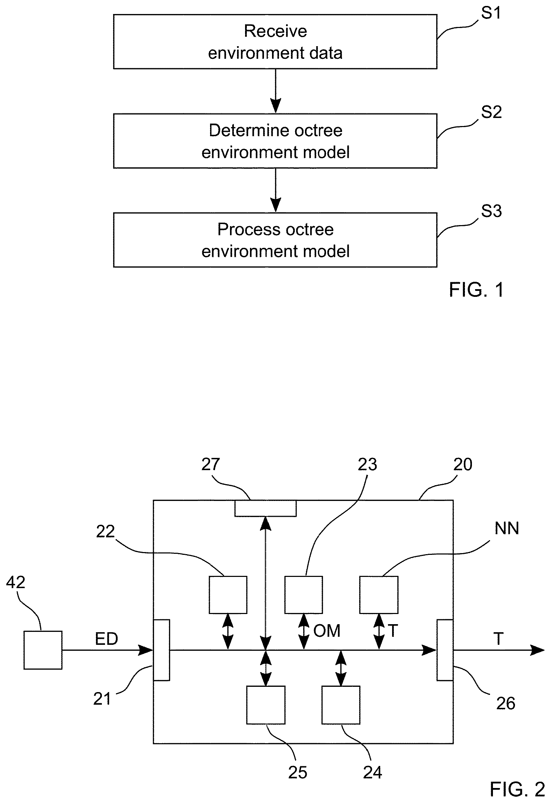

Fig. 1 schematically illustrates a method according to the invention for estimating a trajectory for an autonomous or semi-autonomous vehicle. In a first step, environment data from sensors of the vehicle are received S1. For example, the environment data may be composed of image data and depth data. An octree environment model is then determined S2 from the environment data. The octree environment model preferably has a configurable resolution. Finally, the octree environment model is processed S3 with an encoder-decoder recurrent neural network for estimating the trajectory. For this purpose, the encoder-decoder recurrent neural network further receives a current segment of a reference trajectory. Advantageously, both the encoder and the decoder use a set of long short-term memory networks. The encoder-decoder recurrent neural network may be trained in a self-supervised way using training data consisting of sequences of octrees and points from a reference path.

Fig. 2 schematically illustrates a block diagram of a first embodiment of an apparatus 20 according to the invention for estimating a trajectory for an autonomous or semi-autonomous vehicle. The apparatus 20 has an input 21 via which a receiving unit 22 receives environment data ED from sensors 42 of the vehicle. For example, the environment data ED may be composed of image data and depth data. A modelling unit 23 determines an octree environment model OM from the environment data ED. The octree environment model OM preferably has a configurable resolution. An encoder-decoder recurrent neural network **NN** then estimates the trajectory T by processing the octree environment model OM. For this purpose, the encoder-decoder recurrent neural network NN further receives a current segment of a reference trajectory. Advantageously, both the encoder and the decoder use a set of long short-term memory networks. The encoder-decoder recurrent neural network NN may be trained in a self-supervised way using training data consisting of sequences of octrees and points from a reference path. The trajectory T estimated by the encoder-decoder recurrent neural network NN may be provided for further processing via an output 26. A local storage unit 25 is provided, e.g. for storing data during processing. The output 26 may also be combined with the input 21 into a single bidirectional interface.

The receiving unit 22, the modelling unit 23, and the encoder-decoder recurrent neural network NN may be controlled by a controller 24. A user interface 27 may be provided for enabling a user to modify settings of the receiving unit 22, the modelling unit 23, the encoder-decoder recurrent neural network NN, or the controller 24. The receiving unit 22, the modelling unit 23, the encoder-decoder recurrent neural network NN, and the controller 24 can be embodied as dedicated hardware units. Of course, they may likewise be fully or partially combined into a single unit or implemented as software running on a processor, e.g. a CPU or a GPU.

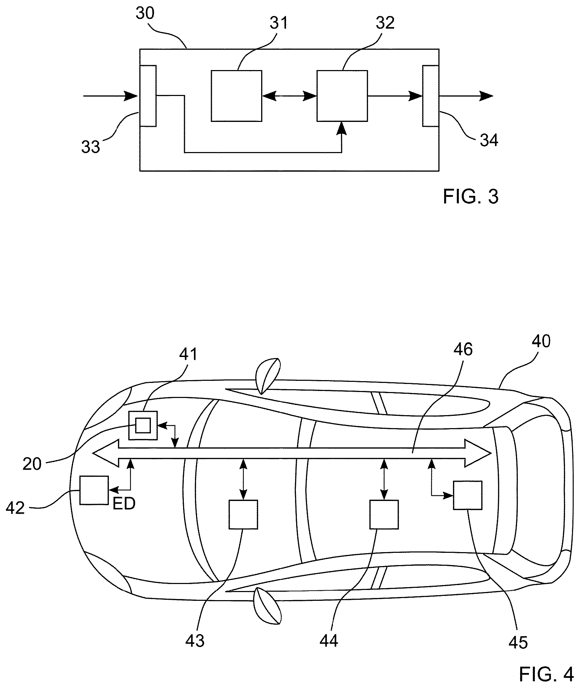

A block diagram of a second embodiment of an apparatus 30 according to the invention for estimating a trajectory for an autonomous or semi-autonomous vehicle is illustrated in Fig. 3. The apparatus 30 comprises a processing device 31 and a memory device 32. For example, the apparatus 30 may be a computer, an electronic control unit or an embedded system. The memory device 32 has stored instructions that, when executed by the processing device 31, cause the apparatus 30 to perform steps according to one of the described methods. The instructions stored in the memory device 32 thus tangibly embody a program of instructions executable by the processing device 31 to perform program steps as described herein according to the present principles. The apparatus 30 has an input 33 for receiving data. Data generated by the processing device 31 are made available via an output 34. In addition, such data may be stored in the memory device 32. The input 33 and the output 34 may be combined into a single bidirectional interface.

The processing device 31 as used herein may include one or more processing units, such as microprocessors, digital signal processors, or a combination thereof.

The local storage unit 25 and the memory device 32 may include volatile and/or non-volatile memory regions and storage devices such as hard disk drives, optical drives, and/or solid-state memories.

Fig. 4 schematically shows an autonomous or semi-autonomous motor vehicle 40, in which a solution in accordance with the invention is implemented. The motor vehicle 40 has an autonomous driving controller 41, which comprises an apparatus 20 for estimating a trajectory T for the vehicle. The motor vehicle 40 further has a sensor system 42, which is able to collect environment data ED. The sensor system 42 may in particular include ultrasonic sensors, laser scanners, radar sensors, lidar sensors or cameras. Further components of the motor vehicle 40 in this example are a navigation system 43 as well as a data transmission unit 44. By means of the data transmission unit 44 a connection to a backend can be established, e.g. to receive updated program code. A memory 45 is available for storing data. The data exchange between the different components of the motor vehicle 40 takes place via a network 46.

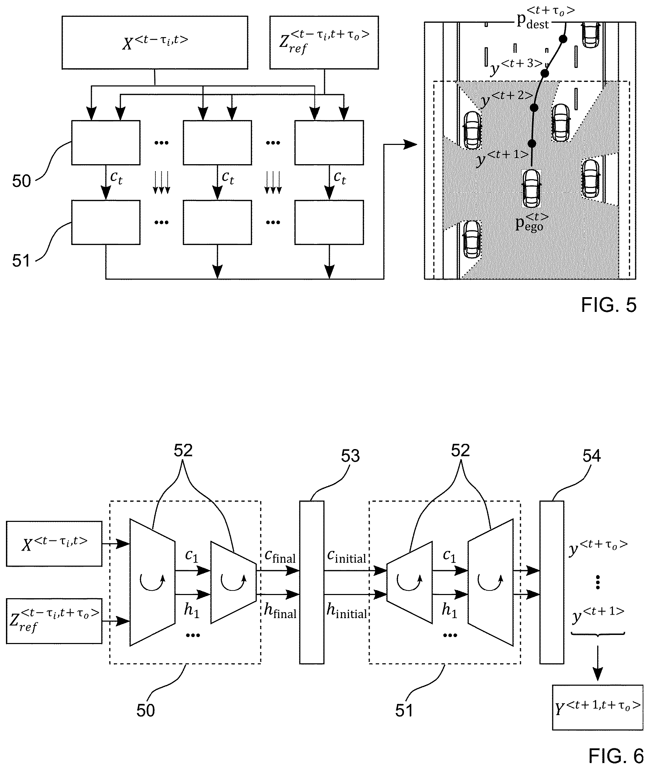

In the following, further details of the invention shall be given with reference to Fig. 5 and Fig. 6.

Throughout this document, the following notation is used. The value of a variable is defined either for a single discrete time step $t$, written as superscript $<t>$, or as a discrete sequence defined in the $<t, t+k>$ time interval, where $k$ represents the length of the sequence. For example, the value of a trajectory output variable $y$ is defined either at discrete time $t$ as $y^{<t>}$, or within a sequence interval $Y^{<t,t+k>}$.

A trajectory is represented as a sequence of states visited by the vehicle, parameterized by time and velocity. Trajectory planning, which is also known as trajectory generation, is concerned with the real-time planning of the actual vehicle's transition from one feasible state to the next, satisfying the kinematic limits of the vehicle and constrained by the navigation comfort, while avoiding obstacles at the same time. During each planning cycle, a path planner module generates an estimated optimal trajectory from the current location of the vehicle, with a look-ahead distance, depending on the speed and line-of-sight of the on-board sensors of the vehicle.

A basic illustration of the local state trajectory estimation problem for autonomous driving is shown in Fig. 5. Given a sequence of 2D octrees $X : \mathbb{R}^3 \times \tau_i \to \mathbb{R}^3 \times \tau_o$, the position of the ego-vehicle $p_{ego}^{<t>} \in \mathbb{R}^2$ in $x^{<t>}$ and the destination coordinates $p_{dest}^{<t>} \in \mathbb{R}^2$ at time $t$, the task is to learn a local trajectory for navigating the ego-vehicle to destination coordinates $y_{dest}^{<t+\tau_o>}$. $\tau_i$ is the length of the octree input sequence, while $\tau_o$ is the number of time steps for which the trajectory of the ego-vehicle is estimated. In other words, with $p_0^{<t>}$ being a coordinate in the current octree observation $X^{<t>}$, a desired local navigation trajectory of the ego-vehicle is sought from any arbitrary starting point $p_0^{<t>}$ to $p_{dest}^{<t+\tau_o>}$. The desired local navigation trajectory has the following properties. First, the travelled path $\|p_0^{<t>} - p_{dest}^{<t+\tau_o>}\|$ is minimal. Second, the lateral velocity, given by the steering angle's rate of change $v_\delta \in [\dot{\delta}_{min}, \dot{\delta}_{max}]$, is minimal, that is a minimal value for $v_\delta^{<t,t+\tau_o>}$. Third, the forward speed $v_f^{<t,t+\tau_o>}$, also known as longitudinal velocity, is maximal and bounded to an acceptable range $[v_{f,min}, v_{f,max}]$.

The vehicle is modeled based on the single-track kinematic model of a robot, with position state $p^{<t>} = \left( p_x^{<t>}, p_y^{<t>} \right)$ and no-slip assumptions.

Different from conventional neural networks, a recurrent neural network contains a time dependent feedback loop in its memory cell. Given a time dependent input sequence $[x^{<t-\tau_i>}, ..., x^{<t>}]$ and an output sequence $[y^{<t+1>}, ..., y^{<t+\tau_o>}]$, a recurrent neural network can be "unrolled" $\tau_i + \tau_o$ times to generate a loop-less network architecture matching the input length. An unrolled network has $\tau_i + \tau_o + 1$ identical layers, that is, each layer shares the same learned weights.

This architecture is comprised of two models, i.e. a stack of several recurrent units for reading the input sequence and encoding it into a fixed-length vector, and a second one for decoding the fixed-length vector and outputting the predicted sequence. The combined models are known as a recurrent neural network encoder-decoder, which is designed specifically for sequence-to-sequence problems. Given the input sequence $X^{<t-\tau_i,t>}$, a basic recurrent neural network encoder computes the corresponding sequence of hidden states ($h_1$, $h_2$, ..., $h_N$):

$$h_t = \tanh(U_{xh}x_t + U_{hh}h_{t-1}), \qquad\qquad (1)$$

where $U_{xh}$ is the weight matrix of the network between the input layer and the hidden layer, and $U_{hh}$ is the weight matrix of recurrent connections in a hidden layer.

A main challenge in using basic recurrent neural networks is the vanishing gradient encountered during training. The gradient signal can end up being multiplied a large number of times, as many as the number of time steps. Hence, a traditional recurrent neural network is not suitable for capturing long-term dependencies in sequence data. If a network is very deep, or processes long sequences, the gradient of the output of the network would have a hard time in propagating back to affect the weights of the earlier layers. Under gradient vanishing, the weights of the network will not be effectively updated, ending up with very small weight values.

In order to counter these challenges, for the solution presented herein a set of long short-term memory networks 52 is used for both the encoder 50 and the decoder 51, as shown in detail in Fig. 6. As opposed to traditional recurrent neural networks, long short-term memory networks solve the vanishing gradient problem by incorporating three gates, which control the input, output and memory state.

The training data consists of sequences of octrees $X^{<t-\tau_i,t>}$ and points from a reference path $Z_{ref}^{<t-\tau_i,t+\tau_o>}$. The labels are determined in a self-supervised way from future trajectory points $Y^{<t+1,t+\tau_o>}$. The encoder-decoder network architecture explicitly aims to leverage the ability of neural networks to learn efficient temporal representations. The input sequences are passed through the encoder network 50, which maps raw inputs to a hidden feature representation 53, called thought vector, and a decoder network 51, which takes this feature representation 53 as input, processes it, and produces the output trajectory prediction.

A long short-term memory network $\varphi$ is parametrized by $\Theta = [W_i, U_i, b_i]$, where $W_i$ represents the weights of the network's gates and memory cell multiplied with the input state, $U_i$ are the weights governing the activations and $b_i$ denotes the set of neuron bias values. A network output sequence is defined as a desired ego-vehicle optimal trajectory:

$$Y^{<t+1,t+\tau_o>} = [y^{<t+1>}, y^{<t+2>}, ..., y^{<t+\tau_o>}], \qquad\qquad (2)$$

where $y^{<t+1>}$ is a predicted trajectory set-point at time $t + 1$. $\tau_i$ and $\tau_o$ are not necessarily equal, i.e. $\tau_i \neq \tau_o$.

The long short-term memory encoder takes the latest octree samples $X^{<t-\tau_i,t>}$ as well as the reference trajectory sequence $Z_{ref}^{<t-\tau_o,t+\tau_o>}$ for the current time step $t$ and produces an intermediate fixed-size vector $c_t$, which captures the temporal structure of the past observations. The hidden state $h_t$ of the long short-term memory encoder is computed as follows:

$$z_t = \sigma(U_{xz}x_t + U_{hz}h_{t-1}) \qquad\qquad (3)$$

$$r_t = \sigma(U_{xr}x_t + U_{hr}h_{t-1}) \qquad\qquad (4)$$

$$\tilde{h}_t = \tanh\big(U_{xh}x_t + U_{rh}(r_t \otimes h_{t-1})\big) \qquad\qquad (5)$$

$$h_t = (1 - z_t) \otimes h_{t-1} + z_t \otimes \tilde{h}_t, \qquad\qquad (6)$$

where $\sigma$ is the sigmoid function and $\otimes$ is an element-wise multiplication operator. $z_t$, $r_t$ and $\tilde{h}_t$ are the update gate, reset gate, and candidate activation, respectively. $U_{xz}$, $U_{xr}$, $U_{xh}$, $U_{hz}$, $U_{hr}$, and $U_{rh}$ are related weight matrices.

Given the context vector $c_t$, the long short-term memory decoder recursively uses the predicted trajectory sample to generate the subsequent trajectory samples, generating the entire future trajectory $Y^{<t+1,t+\tau_o>}$ for the current time step. $Y^{<t+1,t+\tau_o>}$ is defined as a sequence variable Y with data instances $[y^{<t+1>}, ..., y^{<t+\tau_o-1>}, y^{<t+\tau_o>}]$ in a specific time interval $[t + 1, t + \tau_o]$.

The probability of each predicted sequence variable is calculated as:

$$p(y_t|X, y_{t-1}) = g\big(U_o(Ey_{t-1} + U_s s_t + U_c c_t)\big), \tag{7}$$

where $g$ denotes a softmax activation function over all the symbols in the vocabulary, which is implemented in a softmax layer 54. $s_t$ is the current hidden state of the decoder, $y_{t-1}$ represents the previous target symbol, while E denotes the embedding matrix.

The decoder also takes the previous target sequence variable $y_{t-1}$ and the context vector $c_t$ as input and employs a single unidirectional layer to calculate the hidden state $s_t$:

$$z_t' = \sigma\big(U_{yz}Ey_{t-1} + U_{sz}s_{t-1} + C_{cz}c_t\big) \tag{8}$$

$$r_t' = \sigma\big(U_{yr}Ey_{t-1} + U_{sr}s_{t-1} + C_{cr}c_t\big) \tag{9}$$

$$\tilde{s}_t = \tanh\big(U_{ys}Ey_{t-1} + U_{rs}(r_t' \otimes s_{t-1}) + C_{cs}c_t\big) \tag{10}$$

$$s_t = (1 - z_t') \otimes s_{t-1} + z_t' \otimes \tilde{s}_t, \tag{11}$$

where $z_t'$, $r_t'$, and $\tilde{s}_t$ are the update gate, reset gate, and candidate activation, respectively. $U_{yz}$, $U_{yr}$, $U_{ys}$, $U_{sz}$, $U_{sr}$, $U_{rs}$, $C_{cz}$, $C_{cr}$, and $C_{cs}$ are related weight matrices.

Within the algorithm, the decoder keeps the best sequence candidates in generating the future trajectory sample for each time step. As a result, the proposed model can predict the most probable hypothesis of the vehicle trajectory under the octree input framework. As analogy to machine translation problems, a point coordinate inside an octree is a character, an octree is a word, and the sequence of input octrees represents a sentence. Experiments have shown that the described architecture generates a reasonable trajectory and its prediction accuracy is improved when compared to the conventional prediction methods.

In the following further details about the octree environment model shall be given.

Most robotic applications require a model of the surrounding environment, containing free, occupied, and unmapped areas, which has to be efficient with respect to runtime and memory usage. Sensor models usually have errors in the range measurements, and there may also be seemingly random measurements that are caused by reflections or dynamic obstacles. In order to create an accurate model of the environment from such noisy data, the underlying uncertainty has to be taken into account. Multiple uncertain measurements can then be fused into a robust estimate of the true state of the environment.

An octree is a hierarchical data structure for spatial subdivision in 3D. Each node in an octree represents the space contained in a cubic volume, usually called a voxel. Each internal node has exactly eight children, while the minimum voxel size determines the resolution of the octree. The tree can be cut at any level to obtain a coarser subdivision if the inner nodes are maintained accordingly. In robotic mapping, octrees avoid one of the main shortcomings of fixed grid structures, the fact that the extent of the mapped environment does not need to be known beforehand and the environment model only contains volumes that have been measured.

Occupied space is obtained by the end points of a distance sensor such as a laser range finder, while free space corresponds to the observed area between the sensor and the end point. For the input RGB-Depth (RGBD) data, the occupied space is mapped from the depth image, at the corresponding distance in space. Thus, the RGBD data are used to compute an octree environment model, which represents free space, i.e. the driving area, and occupied areas in a three-dimensional perspective.

An important property of octree-based approach is that it allows for efficient modelling of occupied and free space while keeping the memory consumption low. The octrees have fixed sizes, as required by the neural network input, based on the field of view of the RGBD camera. The nodes that are neither occupied nor free are marked as unknown and initialized with zero. Additionally, the resolution can be configured to a lower value in order to reduce the processing times and memory usage even further.

**References**

[1] H. Xu et al.: "End-to-end Learning of Driving Models from Large-scale Video Datasets", 2017 IEEE Conference on Computer Vision and Pattern Recognition (CVPR), pp. 2174-2182.

[2] M. Jaritz et al.: "End-to-End Race Driving with Deep Reinforcement Learning", 2018 IEEE International Conference on Robotics and Automation (ICRA), pp. 2070-2075.

[3] S. Pendleton et al.: "Perception, Planning, Control, and Coordination for Autonomous Vehicles", Machines, Vol. 5 (2017), p. 6.

[4] N. Deo et al.: "Multi-Modal Trajectory Prediction of Surrounding Vehicles with Maneuver based LSTMs", 2018 IEEE Intelligent Vehicles Symposium (IV), pp. 1179-1184.

[5] B. Kim et al.: "Probabilistic Vehicle Trajectory Prediction over Occupancy Grid Map via Recurrent Neural Network", 2017 IEEE 20th International Conference on Intelligent Transportation Systems (ITSC), pp. 399-404.

[6] S. H. Park et al.: "Sequence-to-Sequence Prediction of Vehicle Trajectory via LSTM Encoder-Decoder Architecture", 2018 IEEE Intelligent Vehicles Symposium (IV), pp. 1672-1678.

**Claims**

1. A method for estimating a trajectory (T) for an autonomous or semi-autonomous vehicle (40), the method implemented by at least one processor and comprising:

   - receiving (S1) environment data (ED) from sensors (42) of the vehicle (40); **characterized in that** the method further comprises:
   - determining (S2) an octree environment model (OM) from the environment data (ED); and
   - processing (S3) the octree environment model (OM) and a current segment of a reference trajectory with an encoder-decoder recurrent neural network (NN) for estimating the trajectory (T).

2. The method according to claim 1, wherein the octree environment model (OM) has a configurable resolution.

3. The method according to claim 1 or 2, wherein both the encoder (50) and the decoder (51) use a set of long short-term memory networks (52).

4. The method according to any of the preceding claims, wherein the environment data (ED) is composed of image data and depth data.

5. The method according to any of the preceding claims, wherein the encoder-decoder recurrent neural network (NN) is trained in a self-supervised way using training data consisting of sequences of octrees and points from a reference path.

6. A computer program code comprising instructions, which, when executed by at least one processor, cause the at least one processor to perform a method according to any of claims 1 to 5 for estimating a trajectory (T) for an autonomous or semi-autonomous vehicle (40).

7. An apparatus (20) for estimating a trajectory (T) for an autonomous or semi-autonomous vehicle (40), the apparatus (20) comprising:

   - a receiving unit (22) configured to receive (S1) environment data (ED) from sensors (42) of the vehicle (40);

   **characterized in that** the apparatus (20) further comprises:

   - a modelling unit (23) configured to determine (S2) an octree environment model (OM) from the environment data (ED); and
   - a processor or hardware for implementing an encoder-decoder recurrent neural network (NN) for estimating the trajectory (T) by processing (S3) the octree environment model (OM) and a current segment of a reference trajectory.

8. An autonomous driving controller (41), **characterized in that** the autonomous driving controller (41) comprises an apparatus (20) according to claim 7 or is configured to perform a method according to any of claims 1 to 5 for estimating a trajectory (T) for an autonomous or semi-autonomous vehicle (40).

9. An autonomous or semi-autonomous vehicle (40), **characterized in that** the autonomous or semi-autonomous vehicle (40) comprises an autonomous driving controller (41) according to claim 8.


**Patentansprüche**

1. Verfahren zum Schätzen einer Trajektorie (T) für ein autonomes oder teilautonomes Fahrzeug (40), wobei das Verfahren durch mindestens einen Prozessor implementiert wird und Folgendes umfasst:

   - Empfangen (S1) von Umgebungsdaten (ED) von Sensoren (42) des Fahrzeugs (40);

   **dadurch gekennzeichnet, dass** das Verfahren ferner Folgendes umfasst:

   - Bestimmen (S2) eines Octree-Umgebungsmodells (OM) aus den Umgebungsdaten (ED); und
   - Verarbeiten (S3) des Octree-Umgebungsmodells (OM) und eines aktuellen Segments einer Referenztrajektorie mit einem rekurrenten neuronalen Netz (NN) mit Encoder-Decoder zum Schätzen der Trajektorie (T).

2. Verfahren nach Anspruch 1, wobei das Octree-Umgebungsmodell (OM) eine konfigurierbare Auflösung aufweist.

3. Verfahren nach Anspruch 1 oder 2, wobei sowohl der Encoder (50) als auch der Decoder (51) einen Satz von Netzen (52) mit langem Kurzzeitgedächtnis verwendet.

4. Verfahren nach einem der vorhergehenden Ansprüche, wobei die Umgebungsdaten (ED) aus Bilddaten und Tiefendaten zusammengesetzt sind.

5. Verfahren nach einem der vorhergehenden Ansprüche, wobei das rekurrente neuronale Netz (NN) mit Encoder-Decoder auf eine selbstüberwachte Weise unter Verwendung von Trainingsdaten, die aus Sequenzen von Octrees und Punkten von einem Referenzpfad bestehen, trainiert wird.

6. Computerprogrammcode, umfassend Anweisungen, die bei Ausführung durch mindestens einen Prozessor den mindestens einen Prozessor veranlassen, ein Verfahren nach einem der Ansprüche 1 bis 5 zum Schätzen einer Trajektorie (T) für ein autonomes oder teilautonomes Fahrzeug (40) durchzuführen.

7. Vorrichtung (20) zum Schätzen einer Trajektorie (T) für ein autonomes oder teilautonomes Fahrzeug (40), wobei die Vorrichtung (20) Folgendes umfasst:

   - eine Empfangseinheit (22), die konfiguriert ist, um Umgebungsdaten (ED) von Sensoren (42) des Fahrzeugs (40) zu empfangen (S1);

   **dadurch gekennzeichnet, dass** die Vorrichtung (20) ferner Folgendes umfasst:

   - eine Modellierungseinheit (23), die konfiguriert ist, um ein Octree-Umgebungsmodell (OM) aus den Umgebungsdaten (ED) zu bestimmen (S2); und
   - einen Prozessor oder Hardware zum Implementieren eines rekurrenten neuronalen Netzes (NN) mit Encoder-Decoder zum Schätzen der Trajektorie (T) durch Verarbeiten (S3) des Octree-Umgebungsmodells (OM) und eines aktuellen Segments einer Referenztrajektorie.

8. Steuerung (41) für autonomes Fahren, **dadurch gekennzeichnet, dass** die Steuerung (41) für autonomes Fahren eine Vorrichtung (20) nach Anspruch 7 umfasst oder konfiguriert ist, um ein Verfahren nach einem der Ansprüche 1 bis 5 zum Schätzen einer Trajektorie (T) für ein autonomes oder teilautonomes Fahrzeug (40) durchzuführen.

9. Autonomes oder teilautonomes Fahrzeug (40), **dadurch gekennzeichnet, dass** das autonome oder teilautonome Fahrzeug (40) eine Steuerung (41) für autonomes Fahren nach Anspruch 8 umfasst.

**Revendications**

1. Procédé d'estimation d'une trajectoire (T) pour un véhicule (40) autonome ou semi-autonome, le procédé étant mis en œuvre par au moins un processeur et comprenant :

   - la réception (S1) de données d'environnement (ED) à partir des capteurs (42) du véhicule (40) ;

   **caractérisé en ce que** le procédé comprend en outre :

   - la détermination (S2) d'un modèle d'environnement par arbre octaire (OM) à partir des données d'environnement (ED) ; et
   - le traitement (S3) du modèle d'environnement par arbre octaire (OM) et d'un segment courant d'une trajectoire de référence avec un réseau de neurones (NN) récurrents codeur-décodeur pour estimer la trajectoire (T).

2. Procédé selon la revendication 1, **caractérisé en ce que** le modèle d'environnement par arbre octaire (OM) présente une résolution configurable.

3. Procédé selon la revendication 1 ou 2, dans lequel le codeur (50) et le décodeur (51) utilisent tous deux un ensemble de réseaux (52) de mémoire à long et à court terme.

4. Procédé selon l'une quelconque des revendications précédentes, dans lequel les données d'environnement (ED) sont composées de données d'image et de données de profondeur.

5. Procédé selon l'une quelconque des revendications précédentes, dans lequel le réseau de neurones (NN) récurrents codeur-décodeur est entraîné de manière autosupervisée à l'aide de données d'apprentissage constituées de séquences d'arbre octaire et de points d'un chemin de référence.

6. Code de programme d'ordinateur comprenant des instructions qui, lorsqu'elles sont exécutées par au moins un processeur, amènent l'au moins un processeur à réaliser un procédé selon l'une quelconque des revendications 1 à 5 pour estimer une trajectoire (T) pour un véhicule (40) autonome ou semi-autonome.

7. Appareil (20) d'estimation d'une trajectoire (T) pour un véhicule (40) autonome ou semi-autonome, l'appareil (20) comprenant :

   - une unité (22) de réception configurée pour recevoir (S1) des données d'environnement (ED) à partir des capteurs (42) du véhicule (40) ;

   **caractérisé en ce que** l'appareil (20) comprend en outre :

   - une unité (23) de modélisation configurée pour déterminer (S2) un modèle d'environnement par arbre octaire (OM) à partir des données d'environnement (ED) ; et
   - un processeur ou un matériel pour mettre en œuvre un réseau de neurones (NN) récurrents codeur-décodeur pour estimer la trajectoire (T) en traitant (S3) le modèle d'environnement par arbre octaire (OM) et un segment courant d'une trajectoire de référence.

8. Dispositif de commande (41) de conduite autonome, **caractérisé en ce que** le dispositif de commande (41) de conduite autonome comprend un appareil (20) selon la revendication 7 ou est configuré pour réaliser un procédé selon l'une quelconque des revendications 1 à 5 pour estimer une trajectoire (T) pour un véhicule (40) autonome ou semi-autonome.

9. Véhicule (40) autonome ou semi-autonome, **caractérisé en ce que** le véhicule (40) autonome ou semi-autonome comprend un dispositif de commande (41) de conduite autonome selon la revendication 8.

S1

Receive
environment data

S2

Determine octree
environment model

S3

Process octree
environment model

FIG. 1

27          23          20

22                                NN

42

ED                              OM        T        T

21

25        24

FIG. 2

FIG. 3

FIG. 4

**FIG. 5**

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190220003 A1

**Non-patent literature cited in the description**

- **H. XU et al.** End-to-end Learning of Driving Models from Large-scale Video Datasets. *IEEE Conference on Computer Vision and Pattern Recognition (CVPR)*, 2017, 2174-2182
- **M. JARITZ et al.** End-to-End Race Driving with Deep Reinforcement Learning. *IEEE International Conference on Robotics and Automation (ICRA)*, 2018, 2070-2075
- **S. PENDLETON et al.** Perception, Planning, Control, and Coordination for Autonomous Vehicles. *Machines*, 2017, vol. 5, 6
- **N. DEO et al.** Multi-Modal Trajectory Prediction of Surrounding Vehicles with Maneuver based LSTMs. *IEEE Intelligent Vehicles Symposium (IV)*, 2018, 1179-1184
- **B. KIM et al.** Probabilistic Vehicle Trajectory Prediction over Occupancy Grid Map via Recurrent Neural Network. *IEEE 20th International Conference on Intelligent Transportation Systems (ITSC)*, 2017, 399-404
- **S. H. PARK et al.** Sequence-to-Sequence Prediction of Vehicle Trajectory via LSTM Encoder-Decoder Architecture. *IEEE Intelligent Vehicles Symposium (IV)*, 2018, 1672-1678